# EUROPEAN PATENT APPLICATION

(11) **EP 2 965 985 A1**
(43) Date of publication of application: **13.01.2016**
(21) Application number: 14275253.4
(22) Date of filing: 10.12.2014
(51) Int. Cl.: B64C 3/48, B64C 3/38, B64C 9/14

(54) **Morphable structure**

(30) Priority: 08.07.2014 GB 201412159
(71) Applicant: Swansea University, Swansea SA2 8PP (GB)
(72) Inventor: Parsons, Laura, Carlisle (GB)
(74) Representative: Wilson Gunn

(57) **Abstract**

As shown in **Figure 1,** there is a morphable structure 1 including at least one elongate flexible component 2 having a first end with an securing part 3 for securing said flexible component to a support 5 and a second end 4 forming a tip for the flexible component, the flexible component member having one or more bend-twist couplings and attachment members along its length to allow the flexible component to attach to a covering skin 9 that provides a profile for said flexible component which can bend and twist by way of the one or more bend-twist couplings thereby allowing for changing of the profile of the morphable structure.

## Description

### Field of the Invention

The present invention relates to a morphable structure and in particular but not exclusively to a structure that can bridge the gap between a fixed part and a moveable part of a fluid contact surface such as a wing, rotor blade, turbine blade, or hydrodynamic surface.

### Background of the Invention

Moveable control surfaces on fluid contact surfaces are used throughout a wide range of application areas as a means of varying the amount of force or moment that a given fluid contact surface generates at a given operating condition. Fluid contact surfaces include components such as the wings, tails, and rudders of aircraft, rotor blades on helicopters, the blades of wind turbines, water turbines, jet engine turbines, and steam driven turbines. Maritime craft also often have fluid contact surfaces including rudders, hydrofoils, and sail planes.

Currently, in the aerospace industry trailing edge flaps are the most common form of moveable control surfaces and are used as the primary means of controlling vehicle flight. Fixed wing aircraft such as commercial airliners, military planes, and unmanned aerial vehicles (UAVs) use trailing edge flaps to provide roll, pitch, and yaw control (with ailerons, elevators, and rudders respectively) and use high lift flaps to allow slower speed flight during take-off and landing. Increasingly, there is also interest in using active camber devices on rotorcraft blades to provide capabilities and performance improvements not achievable with the known swash-plate and pitch link control technology which currently predominate the industry. Both traditional trailing edge flaps and newer morphing active camber approaches are being considered and they have the potential to reduce the high levels of vibration and noise inherent in rotorcraft and to increase the performance of the rotor system. Aerospace vehicles also employ moveable control surfaces on the leading edge of their airfoils to control lift forces and enhance performance in certain flight regimes. These devices may be discretely rotating leading edge flaps, rotating and translating slats, or continuously morphing leading edges.

Moveable control surfaces are also prevalent in maritime applications. Ship rudders often employ discrete moving trailing edge flaps as a means of turning the ship. Submarines include a number of sail plane control surfaces which employ moveable control surfaces similar to airplane ailerons to control the motion of the vessel under water. Hydrofoils are used in a number of high speed maritime applications to lift the boat hull out of the water to reduce drag. These hydrofoils often include moveable control surfaces to control the attitude of the boat and to provide steering control.

One of the drawbacks of current fluid contact surface and moveable control surface technologies is that a discontinuity is created on the fluid contact surface when the moveable control surfaces are deployed. Known moveable control surfaces will typically not form a smooth surface over the entire span of a wing because there are two discrete parts to the wing, the main wing and the active part that moves. The moveable control surface has an edge which abuts against the main wing with the result that there is a sudden change from the moveable surface to the "rigid" fluid contact surface. Upon deflection of the moveable part of the surface, large gaps open up between the rigid and moveable surface. Higher pressure air from the underside of the wing then has a way of leaking up towards the upper surface of the wing, leading to the production of a vortex at each end of the moveable control surface. These vortices are a significant source of drag and noise, reducing the overall performance of the vehicle or device.

The current invention seeks to overcome the problems of known systems by providing a morphable structure which acts as a compliant morphing transition between moveable control surface and fixed fluid contact surface, thereby improving properties such as drag and turbulence associated with moveable control surfaces. In particular the invention has applications in the area of fluid control surfaces, for both discrete flap type control surfaces and smooth continuous morphing type surfaces for the leading and trailing edges of airplane, helicopter, wind turbine, water turbine, automotive, maritime, and submarine fluid control surfaces.

### Summary of the Invention

According to a first aspect of the invention there is provided a morphable structure including at least one elongate flexible component having a first end with an securing part for securing said flexible component to a support and a second end forming a tip for the flexible component, said flexible component member having one or more bend-twist couplings and attachment members along its length, said attachment member(s) allowing the flexible component to attach to a covering skin that provides an outer profile for said flexible component which can bend and twist by way of the one or more bend-twist couplings thereby allowing for changing of the profile of the morphable structure.

Preferably, the attachment members are formed by projections on either side of the flexible component and which extend substantially perpendicular to the axis of the flexible component.

It is envisaged that the attachment members increase in length towards the first end of the flexible component. The increase in length of the attachment members is to match the shape of the fluid foil.

It is preferred that the attachment members have bonding pads to secure the covering skin to the attachment members of said flexible component.

Preferably, the flexible component member is provided by an elongate member constructed from materials exhibiting bend-twist coupling behaviour. It may also be that case that the flexible component is provided as an elongate corrugated member said corrugations forming the bend-twist couplings. The material features i.e. the material that the flexible component is formed of, or the geometrical features of the elongate member allow for the bending and twisting motions during deformation of the flexible component.

Preferably the flexible component is provided as an elongate corrugated member with the corrugations being set at a skew angle to a longitudinal long axis of the flexible component running between the securing part and the tip of flexible component so said skew angle allows for the bend-twist coupling.

It is preferred that the corrugated member has peaks and troughs with the peaks having a predetermined profile height and the attachment members are of a dimension that is greater than the profile height of the peaks.

It may be the case that the spaces in the flexible component e.g. spaces in the corrugations are filled with foam. It may also be the case that all of the flexible component is filled with foam or defined areas.

Preferably the covering skin is or is based on an elastomeric material.

It is envisaged that the elastomeric material is selected from one or more of silicone, polyurethane, latex, styrene-butadiene, ethylene propylene diene methylene (EPDM), and thermoplastic elastomers.

It is preferred that the elastomeric material is fibre reinforced.

Preferably the morphable structure has at least one side support which is substantially parallel to the at least one flexible component for attachment to a first surface so said morphable structure provides a continuous transition surface between the first surface and a further surface.

According to another aspect of the invention there is provided a flexible component formed as an elongate member having one or more bend-twist coupled features or materials along its length adapted for use with a morphable structure according to any preceding claim.

According to yet a further aspect of the invention there is provided a fluid contact surface including a morphable structure according to any of claims 1 to 12 and a moveable control surface, said morphable structure forming a continuous surface between the fluid contact surface and the moveable control surface.

According to further aspects of the invention there is are provided a fluid contact surfaces in the form of an aircraft wing, a rotor blade, a wind or water turbine blade, an automotive aerodynamic surface or a hydrodynamic surface for maritime applications.

Other aspects of the invention include an aircraft, a turbine, and automobile, a ship, submarine or other maritime vessel including a fluid contact surface as previously described. The fluid contact surfaces includes at least one morphable structure containing a flexible component as previously described and this morphable structure allows for a smooth transition between different parts of a rotating blade and in the case of a maritime vessel, a smooth transition between different parts of a hydrodynamic foil.

It is envisaged that the corrugated member has peaks and troughs with the peaks having a predetermined profile height with the attachment members having a dimension that is greater than the profile height of the peaks.

It is envisaged that the morphable structure may also be filled with a foam material to provide continuous support for the skin surface.

It is envisaged that the morphable structure has at least one side support which is substantially parallel to the at least one flexible component for attachment to a first surface so said morphable structure provides a continuous transition surface between the first surface and a further surface.

According to a further aspect of the invention there is provided a moveable control surface adapted for use with a morphable structure as previously described.

According to a further aspect of the invention there is provided a fluid contact surface including a morphable structure containing a flexible component as previously described. The fluid contact surface can be attached to a controller, such as an aircraft wing control system to control movement of the flexible component.

The morphable structure can be installed either during the production of components such as an aircraft wing, rotor blade, or the control surfaces of a maritime vessel. Alternatively the morphable structure can be retrofitted to existing fluid contact surfaces.

The invention allows for a morphing transition in fluid contact surfaces by providing a compliant, three-dimensional body that can stretch to fill the increasingly large gap created at the ends of a moveable control surface, e.g. ailerons that deflect upwards or downwards. By having a device that fills this gap in a manner which creates no surface discontinuities or span-wise edges, the flow leakage is reduced and the moveable control surface operates more efficiently. In the present invention, the desired deformed shape is achieved through material and geometric compliance, eliminating the need for moving parts, linkages or mechanisms; thereby increasing reliability and reducing weight.

### Brief Description of the Drawings

The present invention will now be more particularly described, by way of example only, with reference to the accompanying drawings, in which:
Figure 1 shows: a morphable structure in an un-deformed position, shown without a covering skin;
Figure 2 shows: a morphable structure in deformed position, shown with a covering skin;
Figure 3 shows: a flexible component for use in a morphable structure to an embodiment of the invention;
Figure 4: shows an isometric view of the morphable structure in deformed position, shown without covering skin according to an embodiment of the invention; and
Figure 5: shows a bottom view of a morphable structure, shown without covering skin.

### Detailed Description of the Invention

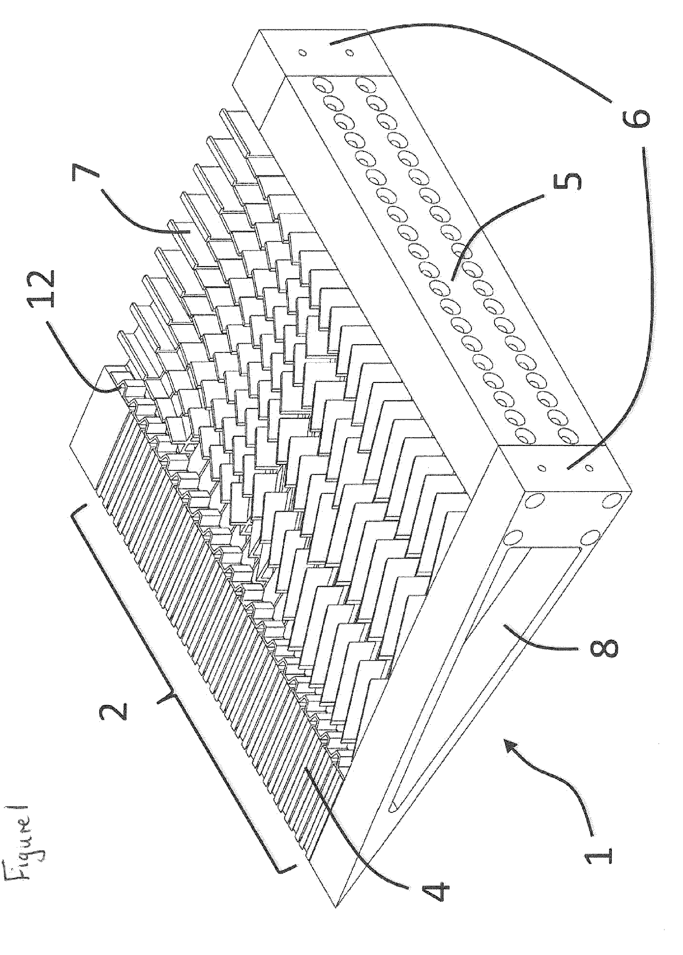

As shown in **Figure 1**, a morphable structure of the present invention which is generally shown as 1. In this figure just the internal structures of the morphable structure are shown, with the covering skin omitted for clarity. The structure includes a number of flexible components 2, positioned side by side to form a series of ribs of the morphable structure.

The flexible components 2, can be attached (either releasably or permanently) to a mounting bracket 5, which can be either part of the morphable structure or an integral part of the fluid contact surface to which the morphable structure is attached. This mounting bracket runs along the length of the morphable structure and attaches to each flexible component 2 individually through any suitable attachment means such as bolts, rivets, or adhesive bonds. The mounting bracket 5 has substantial stiffness as it is not intended or required to deform to achieve the desired morphed shapes.

At either edge of the morphable structure there are also side supports generally shown as 6 that allow for several morphable structures to be attached to one another or a morphable structure to be attached to a fixed component. The side supports may be either rigid or flexible. A flexible side support 7 would be used on the side(s) of the morphable structure which is adjacent to a moveable control surface. The rigid side support 8 would be used on sides adjacent to the fixed fluid contact surface. The flexible side supports 7 differ from the flexible components 2 of the structure in that the flexible side support do not employ any bend-twist coupling. This is because the rotation angle of the the side supports should be zero over the deflection range of the morphable structure to allow it to align with a moveable control surface such as an aileron. The particular type of side support used at a particular side of the morphable structure depends on the configuration of the moveable control surface the morphable structure is being applied to. For instance, if the morphable structure is to be installed at the outboard end of a trailing edge of the moveable control surface then one edge of the morphable structure will have a rigid side support and the other edge would be flexible. This end support arrangement would be reversed for the inboard end of that particular moveable control surface configuration. Alternatively, if the morphable structure were joining two moveable control surfaces together which are operated separately (and which would therefore create a gap if no morphable structure were installed), then both ends of the morphable structure would employ flexible side supports. The side supports need to be wide enough to secure the covering skin and so generally the side supports are wider than the flexible components 2. Making the side supports wider also has the benefit of increasing the stiffness of the side supports in the span-wise direction, which reduces any tendency of the side supports to bend laterally due to tension loads in the covering skin. In addition there are spanwise connection members 12 that provide further stiffening of the structure and typically these are towards the tips 4 of the flexible components 2.

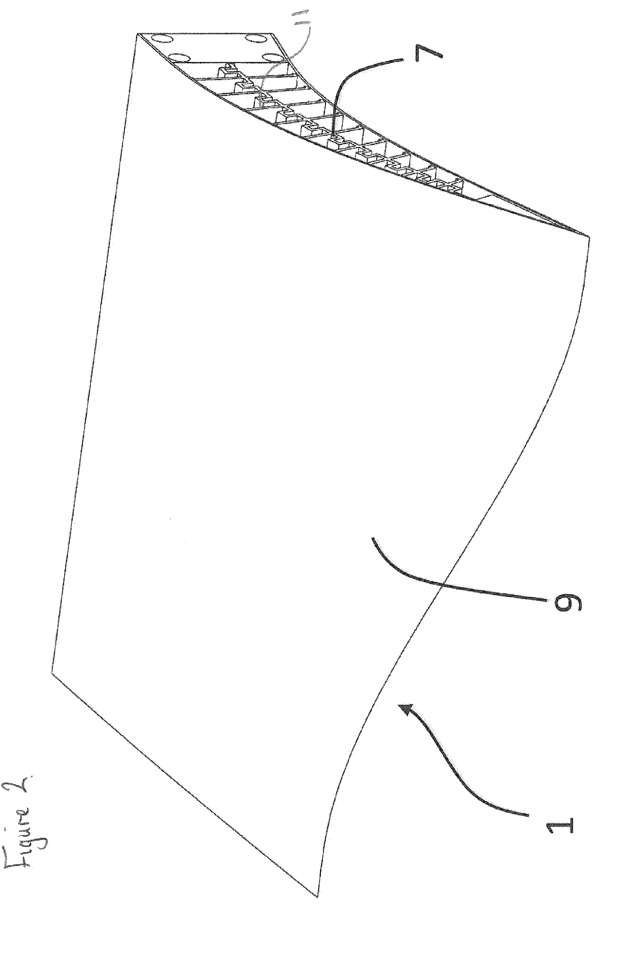

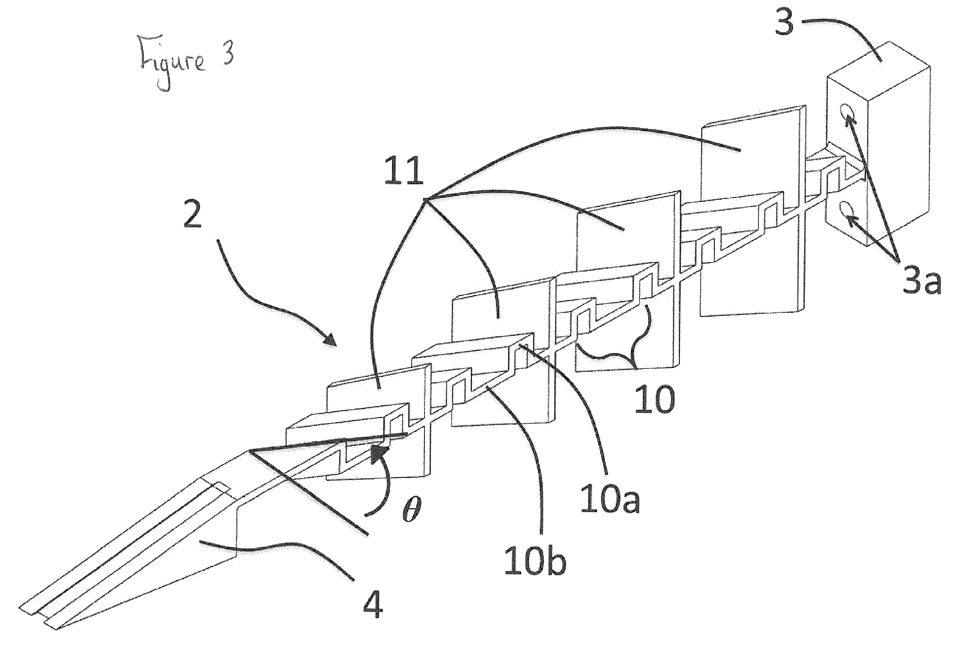

In **Figure 2** the morphable structure 1 is shown in its deformed state and it also shows the covering skin 9. The flexible side support 7 is also visible. The flexible components are not visible due to the covering skin, but a series of them are aligned underneath the skin surface and connected together by the mounting bracket 5 to form a compliant inner core, as visible in Figure 1. Bonded to the top and bottom of the compliant inner core are sheets of the skin material. These skin sheets can be simple elastomer (e.g. silicone, polyurethane, latex, styrene-butadiene, EPDM etc.), elastomers reinforced with stiff fibers, referred to here as elastomeric matrix composites (EMC), or any other suitably flexible and resilient material or structure. In the case of an EMC skin, the orientation of the fibers would be such that they do not overly inhibit the skin strain required to deform the morphable structure but such that the fibers can contribute to the skin stiffness in other directions. The fibers may also be used for limiting the Poisson's ratio of the skin in certain directions to reduce undesirable necking in of the skin between supports. In one preferred embodiment, the fibers of an EMC skin may follow the contours of curvature created by the stringers also referred to as attachment members 11 of the flexible components. As shown in **Figure 3**, which gives a more detailed view of the flexible components whichever skin configuration is used, the skin surfaces for the upper and lower surfaces of the morphable structure are attached by any suitable means to the compliant inner core at a number of discrete points, including the stringers 11, the flexible component tip sections 4, side supports 6 and the mounting bracket 5. At the extreme outward edge of the morphable structure, the upper and lower skin surfaces may also meet and be bonded directly to each other. The skin is therefore bonded to the compliant inner core around its entire perimeter and intermittently to the stringers 11 within its perimeter. The skin may be pre-tensioned before being attached to the core as a means of increasing the out-of-plane stiffness of the skin under fluid pressure loading. By stretching the skin some predetermined amount before attaching it to the compliant core in either one or both of the in-plane directions, a tension force is established in the skin. Once attached to the inner core, this tension force increases the stiffness of the skin to loads normal to its surface such as the aerodynamic pressure loading, allowing the transition surface to be used at higher fluid flow velocities with minimal dimpling or wrinkling of the surface. Pre-tensioning may also be applied to the skin as a means of eliminating skin buckling during deformation of the morphable structure. Depending on the direction of control surface deflection, either the upper or lower surface will experience a shortening of the distance between the ends of adjacent stringers 11 on any given flexible component 2. If there is no pre-tension applied, then this shortening will be experienced by the skin as a compressive force which may result in localized skin surface buckling. If sufficient pre-tension is put into the skin before it is attached to the inner core, then it is possible to offset the strain state of the skin such that it never enters compression over the desired range of deflections. In this way skin surface buckling can be directly eliminated.

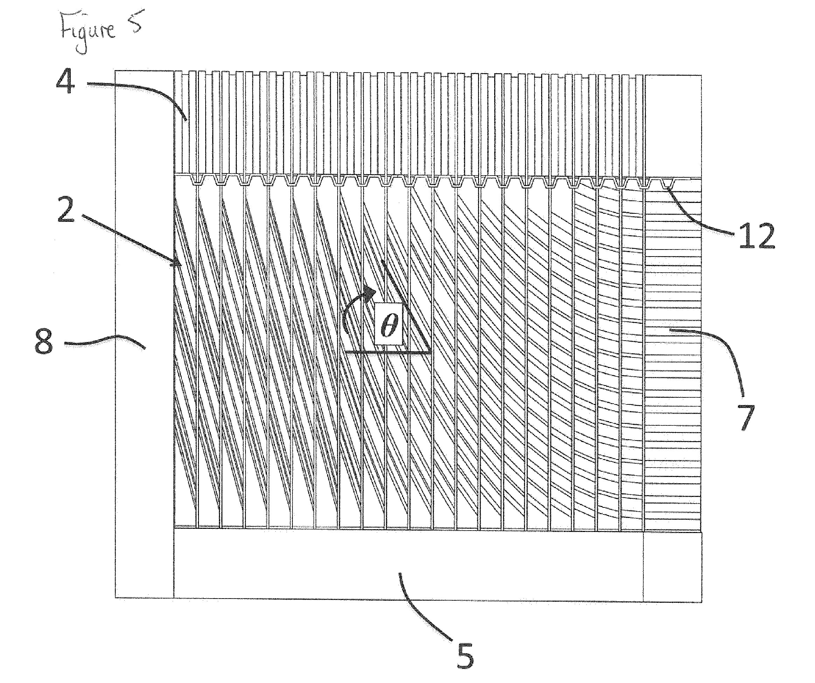

Each flexible component 2 is formed of a chordwise oriented member which is formed of a series of corrugations 10 having peaks 10a and troughs 10b. At a first end of the flexible spine there is a securing part 3 for attachment to the mounting bracket 5. The securing part 3 may include apertures 3a for receiving bolts so that the flexible component can be attached to the mounting bracket 5. At the other end of the flexible components is a tip section 4 which is locally rigid and which forms the shape of the trailing edge of the fluid foil. The corrugation peaks and troughs are shown as having a rectilinear profile but they may also be triangular, trapezoidal, or curved. The corrugations 10 are formed with a skew angle θ relative to the flexible component (shown in more detail in Figure 5). This angle may range from 0 degrees as a minimum and approaching 90 degrees as a maximum. The larger the angle used on a particular flexible component, the stronger the coupling between bending and twisting will be.

Possible configurations for creating bend-twist coupling in the flexible components include skewed corrugations, asymmetric composite layups, skewed projections or combinations thereof. The presence of bend-twist coupling allows the deformed shape of the flexible component to simultaneously create the desired distribution of vertical deformation and rotation required for the flexible component to be tangent to a three dimensionally curved surface. The amount of coupling is quantified by a bend-twist coupling ratio, defined as the magnitude of tip twist angle induced by a unit of tip bending deflection. The magnitude of bend-twist coupling ratio is varied along the span of the morphable structure by having a plurality of discrete inner ribs, each with a single set value of bend-twist coupling ratio, stacked along the span. With this approach, the structure can be designed to deform with a desired distribution of deflection and trailing edge angle, thereby avoiding an undesirable "stepped" shape (which would occur if the trailing edge angles were not matched) in favour of a smooth and continuous surface.

Each flexible component has a number of attachment members in the form of stringers 11 projecting away in a substantially vertical direction from the long axis of the flexible component. The stringers are typically attached to the spine at the troughs of the corrugated member and extend beyond the height of the peak of the corrugated member so there is a clearance between the corrugated members and any covering skin attached to it, which will be attached to the stringers. These stringers create a distributed network of attachment points for the skin to maintain the desired fluid foil thickness distribution throughout the range of morphing deformations. The stringers are designed to have minimum impact on the bending of the flexible component 2, both in terms of not overly stiffening it and in terms of not interfering with their bend-twist coupling functionality. For the embodiment in which the bend-twist coupling is provided by skewed corrugations, the stringers may have the same skew angle θ as the corrugations and may attach to the substantially horizontal portions of the corrugation such that they do not inhibit the bend-twist coupling of the corrugations. By varying the amount of bend-twist coupling present in successive flexible components along the span, the morphable structure as a whole is able to achieve the desired distribution of twist and deflection to realize a smoothly curving surface which connects the moveable control surface to the fluid contact surface.

As a result of the morphable structure having a compliant inner core fixedly joined to a covering skin surface, the morphable structure acts as a single integral structure which is capable of large deformations without having to use any bearings, linkages, rotary joints, sliders or other mechanical motion elements. The structure has no moving parts and is passively driven by the motion of the moveable control surface to which it is attached. By relying entirely on compliance, it has lower mechanical complexity and higher reliability than known devices. Also due to its compliance, the morphable structure of the invention allows for a smoother and more continuous transition between the wing and control surface, or between adjacent control surfaces, than that achieved by known devices, providing superior aerodynamic performance. Being a passive device it requires no actuation, further simplifying the design of the system. The compliant structure is designed to be anisotropic in its stiffness properties to provide high levels of compliance where required for the shape change but low levels of compliance, that is high levels of stiffness, in the other loading directions. Specifically, the morphable structure has high stiffness in the through thickness direction to resist deformation under fluid pressure. It also has high stiffness in the chord-wise direction to resist undesired changes in chord length while morphing.

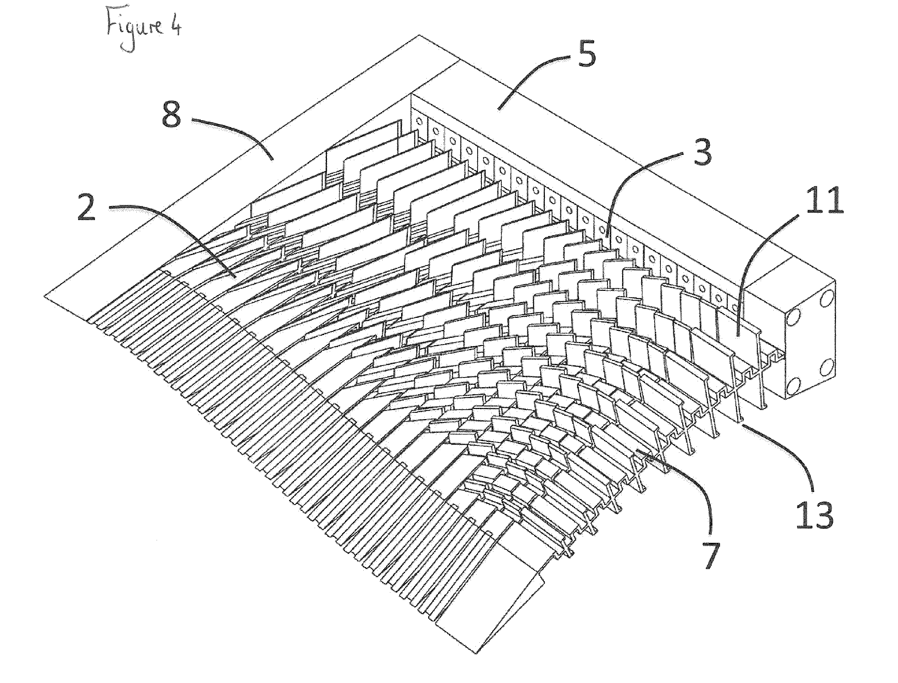

**Figure 4** shows a morphable structure in a deformed state from an isometric view. In this view the smooth and continuous shape of the deformed trailing edge of the structure can be seen. Do to the use of bend-twist coupling, both the amount of deflection deflection and the angle of the tip sections are smooth and continuous between components. The interface of the securing parts 3 of the flexible components 2 with the mounting bracket 5 can be seen. In this embodiment the securing parts fit inside of and are bolted to the mounting bracket, which is C-shaped in cross section. The stringers 11 of the flexible side support 7 are shown with bonding pads 13 attached to their ends. These bonding pads are short sections of flange at the ends of the stringers which are locally parallel to the inside skin surface. These flanges provide increased area for attachment of the skin covering. Although not shown in this embodiment, the flexible components 2 may also include bonding pads on the ends of their stringers.

**Figure 5** shows a bottom view of a morphable structure. This view highlights two aspects of the invention. Firstly, it can be seen that the skew angle θ of the corrugations of the flexible components 2 has been varied along the span of the morphable structure to achieve the variation of bend-twist coupling which produces the desired three dimensional shape. Each individual flexible component has a single value of skew angle, but by stacking a series of flexible components along the span of the morphable structure, any arbitrary distribution of coupling can be achieved. In Figure 5 a spanwise connection member 12 can also clearly be seen. In the embodiment shown this takes the form of a corrugated strip which attaches the tip sections 4 of the flexible components. Further spanwise connection members 12 may be used at different positions along the chord of the structure to provide additional stiffness and shape control. Generally, the spanwise connection members may take the form of flexible strips, corrugations, rods or tubes and are attached to the side supports and flexible components in a manner which provides a degree of structural connection between adjacent components. These spanwise connection members are designed to have minimal interference with the bend-twist coupling of the individual flexible components and to not add unduly to the camber deformation stiffness of the morphable structure. In one preferred embodiment the spanwise connection member 12 is a corrugated strip that is attached to the tip sections 4 of the flexible components 2 and flexible side support 7 and anchored to the end of the rigid side support 8 such that when the flexible side support is bent in the camber direction, the spanwise connection member transfers the motion to the flexible components 2, allowing them to bend in camber and twist due to their bend-twist coupling in a manner which creates a smooth and continuous deformed shape.

Although the foregoing invention has been described in some detail by way of illustration and example, and with regard to one or more embodiments, for the purposes of clarity of understanding, it is readily apparent to those of ordinary skill in the art in light of the teachings of this invention that certain changes, variations and modifications may be made thereto without departing from the scope of the invention as described in the appended claims. Furthermore the invention is intended to cover not only individual embodiments that have been described but also combinations of the described embodiments.

## Claims

1. A morphable structure including at least one elongate flexible component having a first end with a securing part for securing said flexible component to a support and a second end forming a tip for the flexible component, said flexible component member having one or more bend-twist couplings and attachment members along its length, said attachment member(s) allowing the flexible component to attach to a covering skin that provides an outer profile for said flexible component which can bend and twist by way of the one or more bend-twist couplings thereby allowing for changing of the profile of the morphable structure.

2. A morphable structure according to claim 1 wherein the attachment members are formed by projections on either side of the flexible component and which extend substantially perpendicular to the axis of the flexible component.

3. A morphable structure according to claim 1 or claim 2 wherein said attachment members increase in length towards the first end of the flexible component.

4. A morphable structure according to any preceding claim, wherein the attachment members have bonding pads to secure the covering skin to the attachment members of said flexible component.

5. A morphable structure according to any preceding claim wherein the flexible component member is provided by an elongate member constructed from materials exhibiting bend-twist coupling behaviour.

6. A morphable structure according to any of claims 1 to 4 wherein the flexible component is provided as an elongate corrugated member said corrugations forming the bend-twist couplings.

7. A morphable structure according to claim 6, wherein the corrugations are set at a skew angle to a longitudinal long axis of the flexible component running between the securing part and the tip of flexible component so said skew angle allows for the bend-twist coupling.

8. A morphable structure according to claim 6 or claim 7, wherein the corrugated member has peaks and troughs with the peaks having a predetermined profile height and the attachment members are of a dimension that is greater than the profile height of the peaks.

9. A morphable structure according to any preceding claim wherein spaces in the structure are filled with foam.

10. A morphable structure according to any preceding claim wherein the covering skin is or is based on an elastomeric material and preferably wherein the elastomeric material is selected from one or more of silicone, polyurethane, latex, styrene-butadiene, ethylene propylene diene methylene (EPDM), and thermoplastic elastomers and more preferably wherein the elastomeric material is fibre reinforced.

11. A morphable structure according to any preceding claim which has at least one side support which is substantially parallel to the at least one flexible component for attachment to a first surface so said morphable structure provides a continuous transition surface between the first surface and a further surface.

12. A flexible component formed as an elongate member having one or more bend-twist coupled features or materials along its length adapted for use with a morphable structure according to any preceding claim.

13. A fluid contact surface including a morphable structure according to any of claims 1 to 11 and a moveable control surface, said morphable structure forming a continuous surface between the fluid contact surface and the moveable control surface.

14. A fluid contact surface according to claim 13 in the form of either i) an aircraft wing, ii) a rotor blade, iii) a wind or water turbine blade, iv) an automotive aerodynamic surface or v) a hydrodynamic surface for maritime applications.

15. An aircraft including i) a fluid contact surface according to claim 14 when in the form of an aircraft wing or rotor blade or ii) a water turbine or wind turbine including a fluid contact surface according to claim 14 when in the form of a wind or water turbine blade or iii) an automobile including a fluid contact surface according to claim 14 when in the form of an automotive aerodynamic surface or iv) a ship, submarine, or other maritime vessel including a fluid contact surface according to claim 14 when in the form of a hydrodynamic surface.
